# EUROPÄISCHE PATENTSCHRIFT

(11) **EP 0 539 902 B1**
(45) Veröffentlichungstag und Bekanntmachung des Hinweises auf die Patenterteilung: **23.08.1995**
(21) Anmeldenummer: 92118273.9
(22) Anmeldetag: 26.10.1992
(51) Int. Cl.: H02M 3/335

(54) **Ausschaltentlastungsnetzwerk für einen Gleichspannungswandler**
Switch-off snubber for A DC-DC converter
Circuit électrique de dégagement au blocage pour un convertisseur de tension continu

(30) Priorität: 29.10.1991 DE 4135569
(43) Veröffentlichungstag der Anmeldung: 05.05.1993
(73) Patentinhaber: ABB PATENT GmbH, 68309 Mannheim (DE)
(72) Erfinder: Margaritis, Basile, Dr., W-4790 Paderborn-Elsen (DE); Heinemann, Lothar, W-4790 Paderborn (DE)
(74) Vertreter: Rupprecht, Klaus, Dipl.-Ing.

(56) Entgegenhaltungen:
- DE-A- 2 719 026
- PATENT ABSTRACTS OF JAPAN vol. 13, no. 192 (E-753) 9. Mai 1989 ; & JP-A-10 12 866
- PATENT ABSTRACTS OF JAPAN vol. 7, no. 162 (E-187) 15. Juli 1983 ; & JP-A-58 069 463
- PATENT ABSTRACTS OF JAPAN vol. 14, no. 312 (E-948) 5. Juli 1990 ; & JP-A-21 01 964

## Beschreibung

Die Erfindung bezieht sich auf ein Ausschaltentlastungsnetzwerk zur Verringerung der Schaltverluste eines oder mehrerer Leistungstransistoren in einem Gleichspannungswandler.

Das erfindungsgemäße Ausschaltentlastungsnetzwerk wird hauptsächlich am Beispiel eines Zwei-Transistor-Fluß(ZTF)-Konverters erläutert. Es ist jedoch auch für einen Gleichspannungswandler mit einem einzigen Leistungstransistor oder für Konverterschaltungen mit mehr als zwei Transistoren sinngemäß anwendbar. Gleichspannungswandler mit einem einzigen Leistungstransistor sind z.B. als Sperrwandler oder als Sperr-Flußkonverter bekannt. Beim Sperr-Flußkonverter ist in Reihe zur Primärwicklung des Flußkonvertertransformators die Primärwicklung eines Sperrwandlertransformators geschaltet. Der Flußkonvertertransformator überträgt Energie, solange der Leistungsschalter eingeschaltet ist. Gleichzeitig wird durch die Reihenschaltung mit dem Sperrwandlertransformator dieser aufmagnetisiert. Sobald der Leistungsschalter ausgeschaltet wird, übernimmt der Sperrwandlertransformator sekundärseitig die weitere Speisung der Last, da die Magnetisierungsenergie des Sperrwandlertransformators wieder abgebaut werden muß.

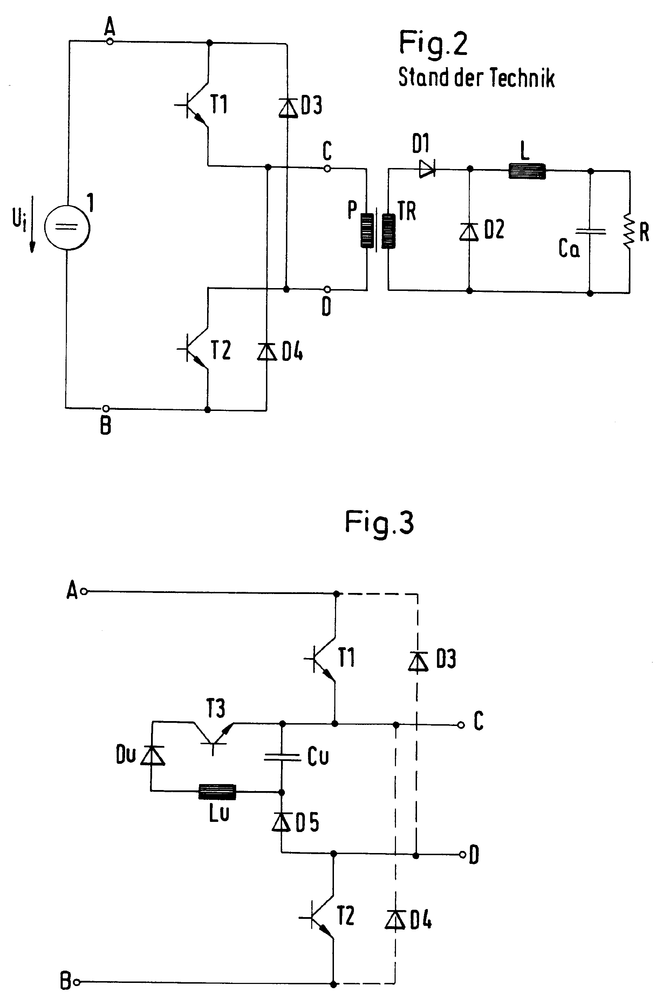

Die Grundschaltung eines ZTF-Konverters ohne Ausschaltentlastungsnetzwerk ist allgemein bekannt und z.B. von J.Wüstehube in ELEKTRONIK 1978, Heft 4, Seiten 102 bis 107, auf Seite 106 als Bild 9 angegeben. Diese bekannte ZTF-Konverterschaltung ist in Figur 2 wiedergegeben. Der ZTF-Konverter weist einen Transformator TR auf, dessen Primärwicklung einen ersten Wicklungsanschluß C und einen zweiten Wicklungsanschluß D hat. Der erste Wicklungsanschluß C ist über einen ersten Leistungstransistor T1 mit einem ersten Spannungsanschluß A einer Spannungsquelle 1 verbunden, der zweite Wicklungsanschluß D über einen zweiten Leistungstransistor T2 mit einem zweiten Spannungsanschluß B der Spannungsquelle 1. Der erste Wicklungsanschluß ist außerdem über eine zweite Entkopplungsdiode D4 mit dem zweiten Spannungsanschluß B verbunden; der zweite Wicklungsanschluß D ist über eine erste Entkopplungsdiode D3 mit dem ersten Spannungsanschluß A verbunden. Sekundärseitig weist die Schaltung die für einen Durchflußwandler übliche Anordnung einer Gleichrichterdiode D1, einer Drosselspule L, einer Freilaufdiode D2, eines Ausgangskondensators Ca und eines Lastwiderstands R auf.

Die Transistoren T1 und T2 werden beim ZTF-Konverter synchron ein- und ausgeschaltet. Der in Figur 2 dargestellte ZTF-Konverter ist ein sogenannter hart-schaltender Konverter, der nur für relativ niedrige Schaltfrequenzen geeignet ist, weil die Schaltverluste die Leistungstransistoren bei hohen Frequenz zu stark belasten. Dieses Problem läßt sich nicht durch Überdimensionieren der Transistoren oder durch Parallelschalten von Transistoren lösen. Abhilfe kann ein Ausschaltentlastungsnetzwerk schaffen, das nachstehend auch mit Entlastungsnetzwerk bezeichnet ist.

Eine Gleichspannungswandlerschaltung mit Entlastungsnetzwerk ist aus der DE-PS 24 43 892 bekannt. Daraus läßt sich die in Figur 4 angegebene Schaltung des Primärteils eines Gleichspannungswandlers mit einem Leistungstransistor T1 ableiten. Als Ausschaltentlastungsnetzwerk sind ein Umschwingkondensator Cu, eine Umschwingdiode Du, eine Umschwinginduktivität Lu und eine Entkopplungsdiode D5 angeordnet. Allerdings wird bei dieser Schaltungsanordnung der Leistungstransistor T1 durch den Umschwingstrom des Entlastungsnetzwerkes belastet. Das bekannte Entlastungsnetzwerk läßt sich im Prinzip durch Mehrfachanordnung auch für Konverter mit mehreren Leistungstransistoren anwenden. Dann ergibt sich aber ein relativ hoher Gesamtaufwand.

Eine weitere Gleichspannungswandlerschaltung mit Entlastungsnetzwerk ist aus der DE 27 19 026 A1 bekannt, wobei eine Reihenschaltung aus einer Diode und einem Kondensator parallel zur Primärwicklung des Wandlertransformators geschaltet ist, allerdings der Umschwingstrom über den Leistungstransistor fließt. Außerdem müßte auch bei dieser bekannten Anordnung im Fall einer Mehr-Transistor-Anordnung für jeden Leistungstransistor ein gesondertes Entlastungsnetzwerk angeordnet werden.

Eine Zwei-Transistor-Anordnung mit einem einzigen Entlastungsnetzwerk ist aus JP 2-101 964 A, In.: Patents Abstract of Japan, Sect. E, 1990, Vol. 14, Nr. 312 (E-948) bekannt. Der Umschwingstrom fließt dort über den Leistungstransistor Q1. Wie bei allen vorgenannten Schaltungen, kann das Umschwingen im Kurzschluß- oder Leerlauffall auch nicht unterbunden werden.

Aus JP 58-69 463 A, In.: Patents Abstract of Japan, Sect. E, Vol. 7, 1983, Nr. 162 (E-187) ist eine weitere, aufwendige Schaltungsanordnung mit einem Hilfstransistor bekannt, der über eine Hilfswicklung am Transformator angesteuert wird. Bei dieser Schaltungsanordnung wird die Gleichspannungsquelle in nachteiliger Weise mit dem Umschwingstrom und Entmagnetisierungsströmen belastet, also mit impulsförmigen Strömen.

Eine Schaltungsanordnung mit zwei Leistungstransistoren und mit Entlastungsnetzwerk ist aus der DE 36 03 368 Al bekannt, wobei je Leistungstransistor ein Thyristor in jedem Entlastungsnetzwerk angeordnet ist. Die Entlastungsnetzwerke weisen eine gemeinsame Drosselspule auf. Die Schaltungsanordnung ist nur für Gegentaktbetrieb, also nicht für den Simultanbetrieb von zwei Leistungstransistoren geeignet.

Aus JP-A-10 12 866 ist ein Ausschaltentlastungsnetzwerk mit Hilfstransistor bekannt, das in Zwei-Transistor-Gleichspannungswandlern einsetzbar ist.

Ausgehend von dem aus der DE 27 19 026 A1 bekannten Stand der Technik liegt der Erfindung die Aufgabe zugrunde, ein einfaches Ausschaltentlastungsnetzwerk mit einer kleinen Bauelementeanzahl anzugeben, das für unterschiedliche Gleichspannungswandler einsetzbar ist.

Diese Aufgabe wird bei einem Ausschaltentlastungsnetzwerk für einen Gleichspannungswandler mit wenigstens einem getakteten Leistungstransistor nach dem Oberbegriff des Anspruchs 1 durch dessen kennzeichnende Merkmale gelöst.

Ausgestaltungen und Vorteile der Erfindung sind der nachstehenden Erläuterung anhand der Figuren der Zeichnung zu entnehmen.

Es zeigen:
- Figur 1: Zwei-Transistor-Fluß(ZTF)-Konverterschaltung mit Ausschaltentlastungsnetzwerk,
- Figur 2: ZTF-Konverter nach dem Stand der Technik (ohne Entlastungsnetzwerk),
- Figur 3: erfindungsgemäßes Ausschaltentlastungsnetzwerk in einer Anordnung mit zwei Leistungstransistoren,
- Figur 4: Teil eines Gleichspannungswandlers mit Ausschaltentlastungsnetzwerk nach dem Stand der Technik,
- Figur 5: Teil eines Gleichspannungswandlers mit erfindungsgemäßem Ausschaltentlastungsnetzwerk,
- Figur 6 bis 10: Spannungs- und Stromverläufe in der Konverteranordnung nach Figur 1, wobei

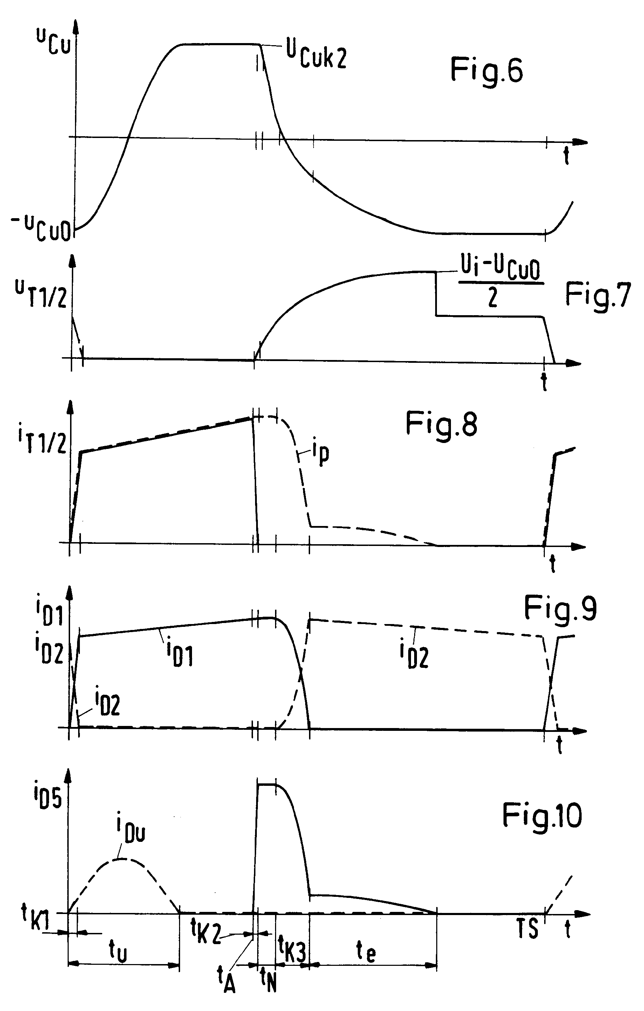

- Figur 6: den Spannungsverlauf am Umschwingkondensator zeigt,
- Figur 7: den Spannungsverlauf an den Leistungstransistoren,
- Figur 8: den Stromverlauf in den Leistungstransistoren und den Primärstrom des Transformators,
- Figur 9: den Stromverlauf in der Gleichrichterdiode und der Freilaufdiode, und

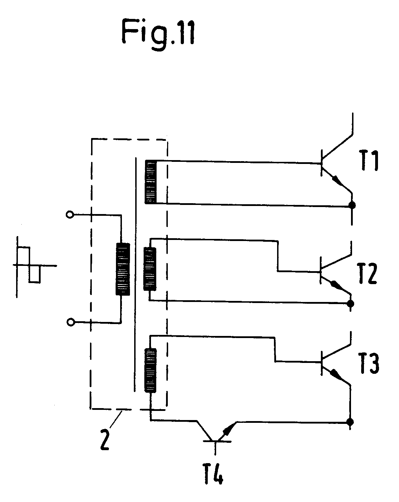

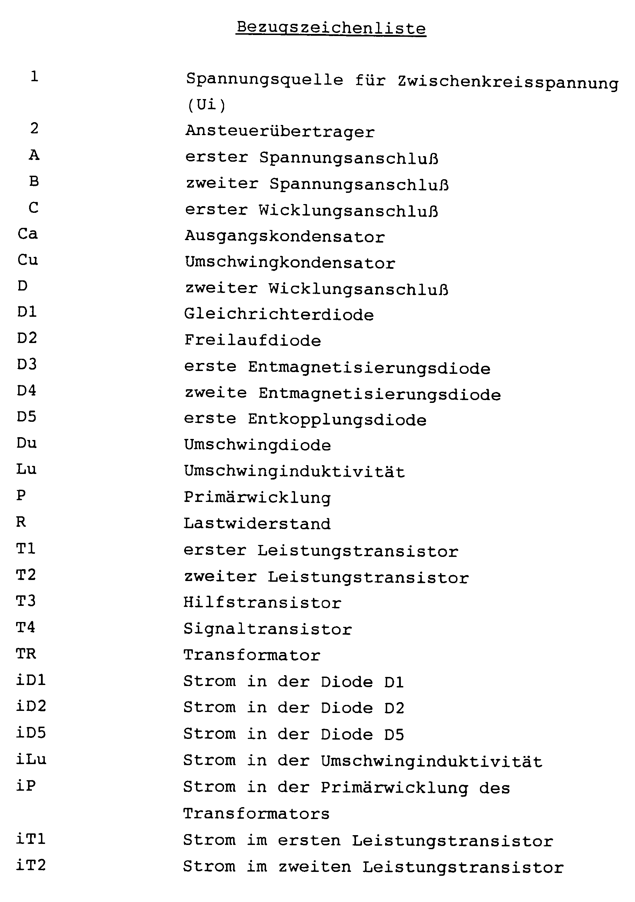

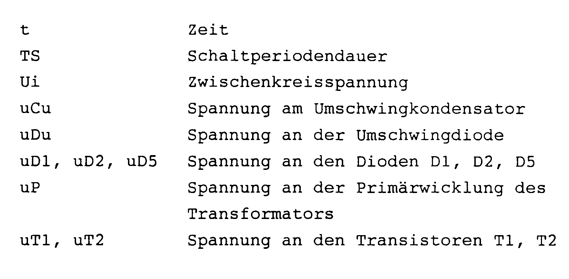

- Figur 10: den Stromverlauf in der Entkopplungsdiode und der Umschwingdiode,
- Figur 11: eine Ansteueranordnung.

Mit der Erfindung wird vorgeschlagen, den Umschwingstrom des Entlastungsnetzwerkes mit einem separaten Schalter, nämlich einem Hilfstransistor, zu steuern und nicht mit dem Leistungstransistor. Eine solche Gestaltung des Entlastungsnetzwerkes bringt selbst bei einer Konverteranordnung mit einem einzigen Leistungstransistor einen Vorteil, weil der Leistungstransistor vom Umschwingstrom entlastet wird. Besonders vorteilhaft ist die Verwendung des Entlastungsnetzwerkes in einem Zwei-Transistor-Konverter, weil dann mit einem Entlastungsnetzwerk beide Leistungstransistoren geschützt werden können und somit eine Reihe von Bauelementen eingespart werden können. Entsprechend ist die Einsparung bei sonstigen Mehrtransistorkonvertern.

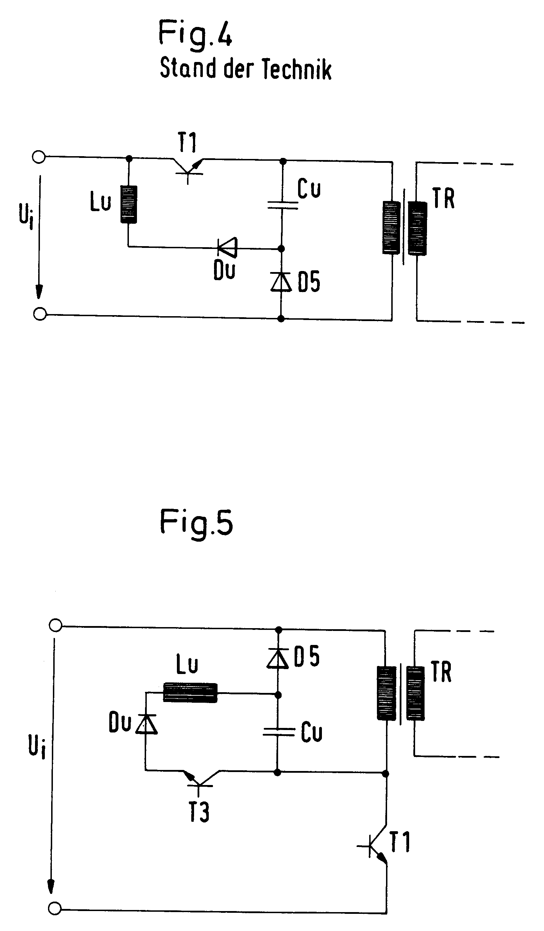

Figur 5 zeigt den Primärteil eines Gleichspannungswandlers mit einem Transformator TR und einem Leistungstransistor T1. Der Leistungstransistor T1 ist in Reihe zur Primärwicklung des Trnsformators TR geschaltet. An die Reihenschaltung ist die Zwischenkreisspannung Ui angelegt. Parallel zur Primärwicklung ist die Reihenschaltung eines Umschwingkondensators Cu mit einer Entkopplungsdiode D5 geschaltet. Ausgehend vom Verbindungspunkt zwischen dem Umschwingkondensator Cu und der Entkopplungsdiode D5 liegt eine Reihenschaltung einer Umschwinginduktivität Lu, einer Umschwingdiode Du und eines auch als Hilfstransistor bezeichneten Transistors T3 parallel zum Umschwingkondensator. Bauelemente mit übereinstimmender Funktion sind auch in den anderen Figuren der Zeichnung mit den gleichen Bezugszeichen versehen.

Der zusätzlich erforderliche Hilfstransistor T3 ist ein sehr kleines Bauteil mit einer vernachlässigbar kleinen Verlustleistung. Der Transistor T3 kann gleichzeitig oder unabhängig vom Transistor T1 geschaltet werden, wie nachstehend anhand eines Zwei-Transistor-Konverters erläutert wird.

Figur 3 zeigt die Anordnung des erfindungsgemäßen Entlastungsnetzwerkes in einem mit den Anschlußstellen A-D bezeichneten Schaltungsteil der in Figur 2 gezeigten Grundschaltung eines ZTF-Konverters. Es ist zu erkennen, daß die beiden Leistungstransistoren T1, T2 durch ein gemeinsames Entlastungsnetzwerk mit den Komponenten Du, Lu, Cu und T3 geschützt werden und daß nur eine Entkopplungsdiode D5 erforderlich ist.

Der Hilfstransistor T3 kann gemeinsam mit den Leistungstransistoren T1 und T2 ein- und ausgeschaltet werden. Er kann aber auch mit einer eigenen Treiberschaltung versehen werden und zu anderen Zeiten als die Leistungstransistoren T1 und T2 ein- und ausgeschaltet werden.

Durch geeignete Ansteuerung des Hilfstransistors T3 kann erreicht werden, daß der Hilfstransistor T3 bei sehr kleinem Tastverhältnis, z.B. im Leerlauf- oder Kurzschlußfall, nicht einschaltet. Es kann somit eine Leerlauf- oder Kurzschlußsicherung erreicht werden. Eine geeignete Schaltungsanordnung zur Ansteuerung des Hilfstransistors T3 ist in Figur 11 dargestellt. Die Leistungstransistoren T1 und T2 und der Hilfstransistor T3 werden bei dieser Anordnung über getrennte Sekundärwicklungen eines Ansteuerübertragers 2 gesteuert. Der Anschluß des Hilfstransistors T3 an eine der Sekundärwicklungen erfolgt unter Zwischenschaltung eines Signaltransistors T4.

Der Signaltransistor T4 sperrt, wenn das Tastverhältnis kleiner als tu/TS wird (vergl. Figur 10).

Das Entlastungsnetzwerk gemäß Figur 3 kann so ausgelegt werden, daß nach dem Ausschalten der Leistungstransistoren T1 und T2 die Ausschaltverluste sehr klein werden, die Spannung am Umschwingkondensator Cu aber nach kurzer Zeit den Wert der Zwischenkreisspannung Ui erreicht. Die Entmagnetisierungs-Dioden D3 und D4 werden dann leitend und die Entkopplungsdiode D5 sperrt. Der Hilfstransistor T3 kann bereits zu diesem Zeitpunkt wieder eingeschaltet werden, wodurch das Umschwingen erfolgt. Das hat den Vorteil, daß die Leistungstransistoren T1, T2 (bei Verwendung von bipolaren Transistoren oder IGBTs) bei einer Spannung am Transistor von etwa Null Volt schalten und somit keine Einschaltverluste entstehen.

Es ist anzumerken, daß durch ein Verbleiben der Entmagnetisierungsdioden D3 und D4 in der Schaltung die Sperrspannungen an den Leistungstransistoren T1 und T2 definiert nach oben begrenzt werden, und zwar auf den Wert der Zwischenkreisspannung Ui. Dies kann bei der Auslegung der Sicherheitsreserve für die zulässige Sperrspannung der Transistoren T1 und T2 berücksichtigt werden. Allerdings wird die Entmagnetisierungszeit des Transformators geringfügig verlängert, wenn die Dioden D3 und D4 in der Schaltung verbleiben. Dies ist aber kein Nachteil, da sich die Entmagnetisierungsenergie des Transformators TR regenerativ zur Speisung der Last einsetzen läßt, wodurch sich eine Reduzierung der Umschaltzeit der Transistoren T1, T2 ergibt.

In Reihe zur Umschwinginduktivität Lu kann eine zusätzliche sättigbare kleine Induktivität geschaltet werden, was bei dem Recovery-Verhalten der Umschwingdiode Du von Vorteil sein kann.

Weiterhin ist anzumerken, daß in Reihe zu den Entmagnetisierungsdioden D3, D4 zusätzlich Zenerdioden (in der Zeichnung nicht dargestellt) geschaltet werden können. Eine solche Anordnung hat den Vorteil, daß die Entmagnetisierung des Transformators TR mit einer höheren Spannung erfolgt und demzufolge die Entmagnetisierung in einer kürzeren Zeit abgeschlossen ist. Die Zenerdioden stellen auch eine Gleichheit der Spannungszeitflächen sicher.

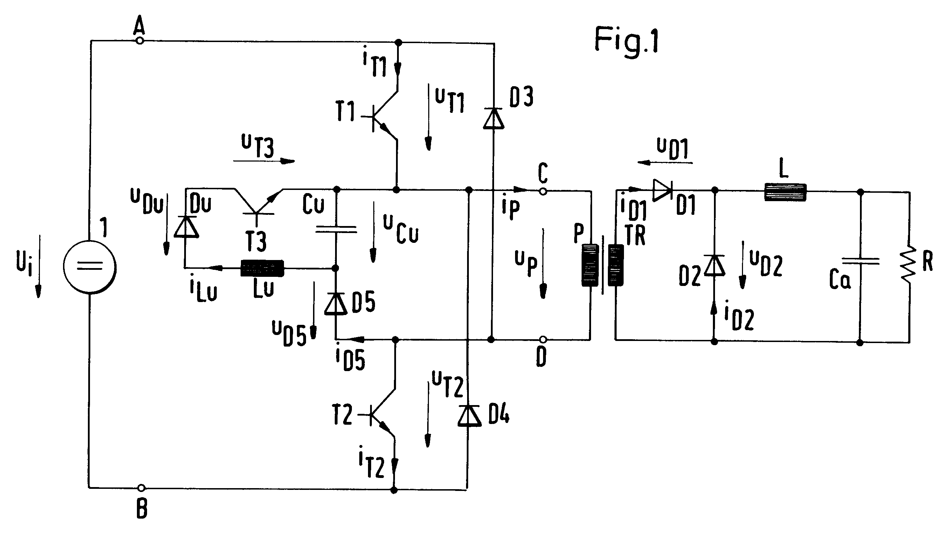

Figur 1 zeigt die Anwendung des in Figur 3 gezeigten Schaltungsteils in der in Figur 2 als Grundschaltung angegebenen Zwei-Transistor-Flußkonverterschaltung. In der Gesamtschaltung nach Figur 1 sind idealisierte Bauelemente angenommen. Anhand dieser Schaltung erfolgt nachstehend eine Funktionsbeschreibung.

In Figur 1 sind die zur Erläuterung erforderlichen Strom- und Spannungspfeile eingetragen. Die Strom- und Spannungsverläufe von einigen Strömen und Spannungen sind in den Figuren 6 bis 10 dargestellt. Die Funktionsbeschreibung für den eingeschwungenen Zustand beginnt in einem Zeitpunkt t=0, wenn die drei Transistoren T1, T2 und T3 eingeschaltet werden (d.h. die Ansteuerung erfolgt mit einer gemeinsamen Treiberschaltung) und endet zu einem Zeitpunkt t=TS, wobei TS die Schaltperiodendauer ist. Die Spannung uCu(t) am Umschwingkondensator Cu wird zum Zeitpunkt t=0 gesetzt als uCu(t=0)=-UCuO, deren Betrag kleiner oder gleich ist dem Betrag der Zwischenkreisspannung Ui (vergleiche Figur 6; die angesprochenen Zeitpunkte t sind jeweils aus Figur 10 ersichtlich).

Nachdem die Leistungstransistoren T1 und T2 eingeschaltet worden sind, kommutiert der Laststrom von Diode D2 nach Diode D1 bis zu einem Zeitpunkt t=tk1 der Strom durch die Diode D2 iD2(t=tk1)=0 beträgt (vergleiche Figur 9). Gleichzeitig schwingt durch das Schließen des Hilfstransistors T3 die Ladung des Umschwingkondensators Cu über die Umschwinginduktivität Lu sinusförmig um, bis zum Zeitpunkt t=tu der Umschwingstrom wieder den Wert Null erreicht (vergleiche iDu-Verlauf in Figur 10). Zu einem Ausschaltzeitpunkt t=tA werden die Transistoren T1, T2 und T3 wieder ausgeschaltet. Erreicht die Spannung uP(t) an der Primärwicklung P den Wert der Kondensatorspannung, also up(t)=UCuU wird der Umschwingkondensator Cu als Spannungsquelle wirksam. Der Strom durch die beiden Leistungstransistoren T1 und T2 kommutiert auf den aus Umschwingkondensator Cu und Diode D5 bestehenden Zweig. Der Strom iP(t) in der Primärwicklung P bleibt von dieser Kommutierung, die sehr schnell abläuft, nahezu unbeeinflußt. Die Spannungen an den beiden Leistungstransistoren T1 und T2 (vergleiche Figur 7) nehmen die Differenz von Zwischenkreisspannung Ui und Umschwingkondensatorspannung UCu an. Diese Kommutierung ist beendet, wenn nach der Zeit t=tk2 die Ströme durch T1 und T2 Null werden (vergleiche Figur 8).

Der weitere zeitliche Verlauf des Stromes iP(t) und damit auch der Ströme iD1(t) und iD2(t) wird jetzt durch den Umschwingkondensator Cu bestimmt. Der Lastkreis wirkt jetzt quasi wie eine Konstantstromquelle, die den Umschwingkondensator Cu linear entlädt. Zudem überlagert sich eine Schwingung, deren Kennkreisfrequenz sich aus Transformator Haupt- und Streuinduktivität, den parasitären Induktivitäten des Primärkreises und des Umschwingkondensators Cu zusammensetzt.

Wenn nach der Zeit t=tN, also der Nachladephase die Spannung an der Diode D2 den Wert der Durchlaßspannung unterschreitet, wird die Diode D2 leitend. Der Laststrom kommutiert nach Cosinus- und Sinusfunktionen von Diode D1 auf Diode D2, bis nach der Zeit t=tk3 der Strom iD2(t=Tk3) den Wert des Laststromes erreicht (vergleiche Figur 9).

Der Lastkreis ist jetzt vom Primärkreis getrennt. Im weiteren Verlauf wird der Transformator TR entmagnetisiert. Erreicht uCu(t) nicht den Wert der Zwischenkreisspannung Ui, bleiben die beiden Entmagnetisierungsedioden unwirksam. Die gesamte Magnetisierungsenergie des Transformators, der primärseitigen parasitären Induktivitäten und Streuinduktivität des Transformators befindet sich jetzt als Ladung im Umschwingkondensator Cu, die im nächsten Schaltzyklus an den Lastkreis abgegeben wird.

Erreicht die Spannung uCu(t) am Kondensator Cu den Wert der Zwischenkreisspannung Ui, werden die Dioden D3 und D4 leitend. Die restliche, im Transformator noch enthaltene Magnetisierungsenergie wird in den Zwischenkreis zurückgespeist.

In den Figuren 6 bis 10 ist der Fall, daß die Entmagnetisierungsdioden D3 und D4 nicht leitend werden, eingezeichnet.

Sind die Entmagnetisierungsdioden D3 und D4 nicht vorhanden, kann die Spannung uCu(t) größere Werte als den Betrag der Zwischenkreisspannung annehmen. Die Entmagnetisierung des Transformators erfolgt in diesem Fall schneller. Allerdings werden die Leistungstransistoren mit höheren Sperrspannungen belastet.

Ist die Entmagnetisierung des Transformators nach der Entmagnetisierungszeit t=te abgeschlossen oder werden die Dioden D3 und D4 leitend, sperrt die Diode D5, und der Umschwingkondensator Cu bleibt auf der jetzt erreichten negativen Spannung, also uCu(t=te)=-UCu0 aufgeladen.

Die Sperrspannungen an den beiden Leistungstransistoren T1 und T2 erreichen in diesem Schaltintervall ihren maximalen Wert.

Nachdem der Transformator entmagnetisiert ist, laufen primärseitig bei idealen Bauelementen keinerlei Schwingvorgänge ab. Die Sperrspannungen an den Transistoren T1 und T2 verringern sich auf das Niveau der halben Zwischenkreisspannung, wie auch beim ZTF-Konverter ohne das Entlastungsnetzwerk (uP(t)=0). An der Diode D5 liegt als Sperrspannung die Spannung des Umschwingkondensators Cu an. Die Leistungstransistoren T1 und T2 können jetzt wieder eingeschaltet werden.

## Patentansprüche

1. Ausschaltentlastungsnetzwerk für einen Gleichspannungswandler mit wenigstens einem getakteten Leistungstransistor (T1,T2), wobei
a) der (bzw. die) Leistungstransistor(en) in Reihe mit der Primärwicklung (P) eines Transformators (TR) liegt (bzw. liegen),
b) zur Primärwicklung (P) eine Reihenschaltung eines Umschwingkondensators (Cu) und einer Entkopplungsdiode (D5) parallel liegt, und
c) eine Umschwingdiode (Du) in Reihenschaltung mit einer Umschwinginduktivität (Lu) vorhanden ist,
dadurch gekennzeichnet, daß
d) die Reihenschaltung von Umschwingdiode (Du) und Umschwinginduktivität (Lu) außerdem in Reihenschaltung einen Hilfstransistor (T3) enthält, und
e) die Reihenschaltung dieser drei Bauelemente (Du, Lu, T3) zum Umschwingkondensator (Cu) parallel geschaltet ist.

2. Ausschaltentlastungsnetzwerk nach Anspruch 1, dadurch gekennzeichnet, daß der Gleichspannungswandler eine Zwei-Transistor-Konverteranordnung ist, die primärseitig eine Reihenschaltung eines ersten Leistungstransistors (T1), der Primräwicklung des Transformators (TR) und eines zweiten Leistungstransistors (T2) enthält, wobei ebenfalls die Reihenschaltung der Diode (D5) und des Kondensators (Cu) parallel zur Primärwicklung liegt und die zum Kondensator (Cu) parallelgeschaltete Reihenschaltung von Umschwinginduktivität (Lu), Umschwingdiode (Du) und Transistor (T3) als für beide Leistungstransistoren (T1,T2) gemeinsames Entlastungsnetzwerk wirkt.

3. Ausschaltentlastungsnetzwerk nach einem der vorstehenden Ansprüche, dadurch gekennzeichnet, daß der Transistor (T3) über einen Signaltransistor (T4) angesteuert ist, der die Ansteuerung des Transistors (T3) im Leerlauf- oder Kurzschlußfall sperrt, d.h. im Fall des Unterschreitens eines einstellbaren Tastverhältnisses.

## Claims

1. Switch-off snubber network for a DC/DC convertor having at least one pulsed power transistor (T1,T2),
a) the power transistor or transistors being connected in series with the primary winding (P) of a transformer (TR),
b) a series circuit formed from a ringing capacitor (Cu) and a decoupling diode (D5) being connected in parallel with the primary winding (P), and
c) a ringing diode (Du) being provided in the series circuit with a ringing inductor (Lu),
characterized in that
d) the series circuit of the ringing diode (Du) and ringing inductor (Lu) additionally contains an auxiliary transistor (T3) in the series circuit, and
e) the series circuit formed from these three components (Du, Lu, T3) is connected in parallel with the ringing capacitor (Cu).

2. Switch-off snubber network according to Claim 1, characterized in that the DC/DC convertor is a two-transistor convertor arrangement which contains on the primary side a series circuit formed from a first power transistor (T1), the primary winding of the transformer (TR) and a second power transistor (T2), the series circuit formed by the diode (D5) and the capacitor (Cu) likewise being connected in parallel with the primary winding, and the series circuit, which is connected in parallel with the capacitor (Cu), of the ringing inductor (Lu), ringing diode (Du) and transistor (T3) acting as a common snubber network for both power transistors (T1,T2).

3. Switch-off snubber network according to one of the preceding claims, characterized in that the transistor (T3) is driven via a signal transistor (T4) which switches off the drive of the transistor (T3) in the no-load or short-circuit case, that is to say in the event of an adjustable duty ratio being undershot.

## Revendications

1. Circuit de décharge à coupure pour convertisseur continu-continu avec au moins un transistor de puissance (T1, T2) synchronisé, dans lequel
a) le (ou les) transistor(s) de puissance est (sont) monté(s) en série avec l'enroulement primaire (P) d'un transformateur (TR),
b) un circuit série comprenant un condensateur (Cu) d'inversion et une diode de découplage (D5) est branché en parallèle avec l'enroulement primaire (P) et
c) une diodc (Du) d'inversion est branchée en série avec une inductance (Lu) d'inversion, caractérisé par le fait que
d) le circuit série constitué par la diode (Du) d'inversion et l'inductance (Lu) d'inversion comporte en outre un transistor (T3) auxiliaire également connecté en série et que
e) le circuit série constitué de ces trois éléments (Du, Lu, T3) est branché en parallèle avec le condensateur (Cu) d'inversion.

2. Circuit de décharge à coupure selon la revendication 1, caractérisé par le fait qu le convertisseur continu-continu est un circuit convertisseur à deux transistors qui comporte, côté primaire, un montage en série d'un premier transistor de puissance (T1), de l'enroulement primaire du transformateur (TR) et d'un deuxième transistor de puissance (T2), le montage en série de la diode (D5) et du condensateur (Cu) d'inversion étant également placé en parallèle avec l'enroulement primaire et le circuit série formé de l'inductance (Lu) d'inversion, de la diode (Du) d'inversion et du transistor (T3), monté en parallèle avec le condensateur (Cu) d'inversion, servant de circuit de déchargé commun pour les deux transistors de puissance (T1, T2).

3. Circuit de décharge selon une des revendications précédentes, caractérisé par le fait que le transistor (T3) est commandé par l'intermédiaire d'un transistor de délivrance de signal (T4) qui bloque la commande du transistor (T3) en cas d'absence de charge ou en cas de court-circuit, c'est-à-dire en cas de franchissement vers le bas d'un rapport cyclique réglable.
